Europäisches Patentamt

European Patent Office

Office européen des brevets

(19)

(11) **EP 1 566 971 A2**

(12) **EUROPEAN PATENT APPLICATION**

(43) Date of publication:
24.08.2005 Bulletin 2005/34

(51) Int Cl.⁷: **H04N 7/50**

(21) Application number: 05003195.4

(22) Date of filing: 15.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.02.2004 US 783696**

(71) Applicant: **SEIKO EPSON CORPORATION**
**Tokyo 163 (JP)**

(72) Inventor: **Chen, William**
**Foster City, California 94404 (US)**

(74) Representative: **Grünecker, Kinkeldey,**
**Stockmair & Schwanhäusser Anwaltssozietät**
**Maximilianstrasse 58**
**80538 München (DE)**

(54) **Video codec system with real-time complexity adaptation and region-of-interest coding**

(57)    A method for adapting the number of encoded bits produced by a codec to a system target bit-rate, setting the frequency at which intra-coded frames are sent to a second predetermined frequency range that is lower than the first predetermined frequency range, unless there is motion in more than a predetermined percentage of the macroblocks, in which case the sending frequency of the intra-coded frames is set to the first predetermined frequency range.

Fig. 3

EP 1 566 971 A2

**Description**

**Continuing Application Data**

This application claims priority under 35 U.S.C. § 120 as a continuation-in-part of application serial no. 10/631,155, filed on July 31, 2003, and entitled "Video Codec System with Real-Time Complexity Adaptation and Region-of-Interest Coding." The content of the parent application is incorporated by reference herein.

**BACKGROUND OF THE INVENTION**

**Field of the Invention**

The present invention relates to video encoding and decoding techniques. More particularly, the invention pertains to codec (encoder/decoder) algorithms that can adapt the number of encoded bits to a system target bit-rate, adapt to available computational resources in response to complexity measurements performed at run-time, and/or concentrate more resources to one or more selected regions-of-interest during the encoding process by applying a region-of-interest coding scheme that includes scalable computational complexity and transcoding.

**Description of the Related Art**

As a tool for providing real-time transmission of video and sound between two or more sites, video conferencing is widely used in the modern business world, and is becoming more popular in other aspects of life as well. Such transmission may be accompanied by the transmission of graphics and other data, depending on the environment in which the system is employed. Most video conferences involve two-way, interactive exchanges, although one-way broadcasts are sometimes used in specialized settings. The overall quality of a video conference depends on a number of factors, including the quality of the data capture and display devices, the amount of bandwidth used, and the quality and capabilities of the video conferencing system's basic component: the codec (coder/decoder).

The codec includes the algorithms used to compress and decompress the video/image and sound data so that such data is easier for the processors to manage. Codecs define the video settings such as frame rate and size and the audio settings such as bits of quality. Most codecs only have rate-control. That is, such systems can adapt to available bandwidth. However, for a system (such as a video conferencing server) with multiple codecs using up shared computational resources, it is very important to be able to adaptively modify the complexity of the codecs. Some codecs have parameters for specifying the complexity, but do not have complexity parameters grouped into algorithm settings. Moreover, conventional codecs do not measure run-time complexity and change algorithm settings automatically in response to them.

Some codecs include region-of-interest (ROI) coding in which a selected ROI is coded with more bits than the remainder of the frame. While such ROI schemes typically allow for one relatively high level of quality for the ROI and another lower quality level for the remainder of the image, they do not offer scalable computational complexity nor transcoding which can provide a graded coding of the non-ROI.

**OBJECTS OF THE INVENTION**

It is therefore an object of the present invention to overcome these problems.

It is another object of this invention to provide a codec (encoder/decoder) that is configured to adapt its operating setting(s) according to available computational resources in response to actual complexity measurements performed at run-time, which can increase the number of video codecs that can co-exist in a system in which multiple video codecs have to operate simultaneously in real-time, sharing the system's available resources.

It is a further object of this invention to provide an improved ROI coding scheme.

**SUMMARY OF THE INVENTION**

In one aspect, the invention entails a method for adapting the number of encoded bits produced by a codec to a system target bit-rate. Such method comprises determining if the system target bit-rate is such that bits-per-macroblock is less than a predetermined number. If not, the method further comprises setting the frequency at which intra-coded frames are sent to a first predetermined frequency range, allocating bits between intra-coded frames and inter-coded frames according to a first predetermined factor, and controlling quantizer step sizes for the intra-coded and inter-coded frames. If so, the method further comprises setting the frequency at which intra-coded frames are sent to a second predetermined frequency range that is lower than the first predetermined frequency range, unless there is motion in more than a predetermined percentage of the macroblocks, in which case the sending frequency of the intra-coded frames is set to the first predetermined frequency range, and setting to zero transform coefficients having a zig-zag index greater than or equal to a preset number in select intra-coded frame transform coefficient blocks.

Preferably, the select intra-coded frame transform coefficient blocks include (i) each luminance block with a DC transform coefficient whose value exceeds a predetermined number and (ii) each high-activity block wherein the total absolute quantized level in select transform coefficients is less than a preset fraction of the total absolute quantized level in all of the transform coefficients in that block.

Preferably, the controlling of the quantizer step sizes comprises setting the quantizer step size for a particular type of frame to the average value used over the last frame of the same type, and adjusting the quantizer step size for the current frame of that type by comparing a partial bit-rate for that frame with a bit-rate range.

The method may also comprise maintaining a count of the actual bits used per frame, and, if the accumulated bit count exceeds a bit budget for a typical inter-coded frame, skipping the encoding of the next inter-coded frame.

According to another aspect of the invention, a codec comprising an encoder and a decoder is provided. The encoder includes a first plurality of variable parameters including x-search window, y-search window, skip mode protection, half-pel subsample factor, full-pel subsample factor, use half-pel, transform truncation, and motion estimation method for specifying a plurality of different settings at which a coding algorithm applied to uncoded video data can operate. The decoder includes a second plurality of variable parameters including transform algorithm, chroma skipping, and frame display skipping for specifying a plurality of different settings at which a decoding algorithm applied to coded video data can operate. The codec is configured such that, during operation, at least one of the coding algorithm and decoding algorithm is able to dynamically change its operating setting according to available computational resources in response to actual complexity measurements performed at run-time.

In preferred embodiments, the plurality of different settings at which the coding algorithm can operate is 9, and the plurality of different settings at which the decoding algorithm can operate is 5.

Individual encoder and decoder modules are also provided. The encoder comprises the plurality of variable parameters as set forth above and is configured such that, during operation, its coding algorithm is able to dynamically change its operating setting according to available computational resources in response to actual complexity measurements performed at run-time. The decoder comprises the plurality of variable parameters set forth above and is configured such that, during operation, its decoding algorithm is able to dynamically change its operating setting according to available computational resources in response to actual complexity measurements performed at run-time.

In another aspect, the invention involves a video conferencing system, comprising a plurality of codecs configured to share the system's computational resources. Each codec includes an encoder and a decoder as described above. Each of the codecs is configured such that its algorithms in use dynamically adapt their operating settings during operation according to the system's available computational resources in response to actual complexity measurements performed at run-time.

According to another aspect, the invention is directed to an arrangement comprising a plurality of clients and at least one server. In such an arrangement, there is a device configured to respond to a particular client for which a region-of-interest is identified in a video to be delivered to that client. The device may be incorporated in the server and assigned to serve that client. The device comprises a resource-allocation module configured to assign more bits to coding video data in the region-of-interest, and to assign less bits to coding video data outside of the region-of-interest by setting a quantizer step size for the video data outside of the region-of-interest to a value that increases as the distance from the center of the region-of-interest increases; a scalable complexity module configured to process the region-of-interest video data before processing video data outside of the region-of-interest; and a transcoding module configured to transcode the video for that client in accordance with that client's display properties.

In such an arrangement, preferably the device is further configured to reorder a bit-stream representing the video to be delivered to the particular client by placing the region-of-interest data first or by adding forward error correction to the region-of-interest.

In such an arrangement, the region-of-interest for a particular client comprises may be one or more regions-of-interest which may be defined by a user of the particular client.

In such an arrangement, preferably the user of the particular client identifies the one or more regions-of-interest by sending a request, along with the properties of the one or more regions-of-interest to the server through a back channel.

In another aspect of the invention, the method for adapting the number of encoded bits produced by the codec to a system target bit-rate is embodied as a program of instructions on a machine-readable medium. The instructions include (a) determining if the system target bit-rate is such that bits-per-macroblock is less than a predetermined number; (b) setting the frequency at which intra-coded frames are sent to a first predetermined frequency range; (c) allocating bits between intra-coded frames and inter-coded frames according to a first predetermined factor; (d) controlling quantizer step sizes for the intra-coded and inter-coded frames; (e) setting the frequency at which intra-coded frames are sent to a second predetermined frequency range that is lower than the first predetermined frequency range, unless there is motion in more than a predetermined percentage of the macroblocks, in which case the sending frequency of the intra-coded frames is set to the first predetermined frequency range; and (f) setting to zero transform coefficients having a zig-zag index greater than or equal to a preset number in select intra-coded frame transform coefficient blocks. Instructions (b), (c) and (d) are executed only if it is determined that the system target bit-rate is such that bits-per-macroblock is not less than a predetermined number, whereas instructions (e) and (f) are executed only if it is determined that the system target bit-rate is such that bits-per-macroblock is less than a predetermined number.

In this aspect, as in the method aspect, the select intra-coded frame transform coefficient blocks preferably include (i) each luminance block with a DC transform coefficient whose value exceeds a predetermined number and (ii) each high-activity block wherein the total absolute quantized level in select transform coefficients is less than a preset fraction of the total absolute quantized level in all of the transform coefficients in that block.

Preferably, instruction (d) comprises setting the quantizer step size for a particular type of frame to the average value used over the last frame of the same type, and adjusting the quantizer step size for the current frame of that type by comparing a partial bit-rate for that frame with a bit-rate range.

Preferably, the program of instructions further comprises (g) instructions for maintaining a count of the actual bits used per frame, and, if the accumulated bit count exceeds a bit budget for a typical inter-coded frame, skipping the encoding of the next inter-coded frame.

Other objects and attainments together with a fuller understanding of the invention will become apparent and appreciated by referring to the following description and claims taken in conjunction with the accompanying drawings.

## BRIEF DESCRIPTION OF THE DRAWINGS

Figs. 1 (a) and (b) are functional block diagrams of the encoder and decoder portions respectively of a codec (encoder/decoder) configured in accordance with embodiments of the invention.

Fig. 2 is a block diagram of an exemplary video conferencing system in which a codec is installed at each site.

Fig. 3 is a schematic diagram of a media hub connecting various client devices, according to embodiments of the invention.

Fig. 4 is a block diagram of a video codec that adapts to a plurality of system inputs, constructed in accordance with embodiments of the invention.

Fig. 5 is a graphical illustration of rate control performance of a codec constructed according to embodiments of the invention encoding two sequences at 256 kbps and 128 kbps respectively.

Fig. 6 is a graphical illustration of motion vector distribution for a codec-equipped cell phone video sequence.

Figs. 7 (a) and (b) are graphs illustrating performance of skip mode prediction in terms of computational complexity (Fig. 7 (a)) and peak signal-to-noise ratio (PSNR) (Fig. 7 (b)).

Fig. 8 illustrates sub-sample patterns (p1, p2, p3, p4) used to reduce the computational complexity of SAD in accordance with embodiments of the invention.

Fig. 9 is a graph illustrating PSNR performance of sub-sample patterns (p1, p2, p3, p4).

Fig. 10 is a graph of a complexity distortion curve used to determine encoder algorithm settings in accordance with embodiments of the invention.

Fig. 11 is a flow diagram describing the manner in which the algorithm(s) of the codec, encoder and/or decoder adapt (i.e., change setting) in response to actual complexity measurements performed at run-time.

Figs. 12 (a) and (b) are images that show typical regions-of-interest identified in the figures by rectangular bounding boxes.

Fig. 13 is a schematic diagram illustrating a region-of-interest (ROI) quality request issued by a client through a back channel.

Figs. 14 (a) and (b) show a comparison of an original image (a) to the same image with an ROI selected for better coding; Figs. 14 (c) and (d) show that the application of ROI coding gives higher PSNR values.

Fig. 15 is a schematic diagram illustrating the computational scalability that ROI coding provides.

Fig. 16 is a schematic diagram illustrating an ROI request to upscale video.

Fig. 17 schematically illustrates an ROI request to transcode a bit-stream.

Figs. 18 (a) and (b) are complexity-rate distortion curves, Fig. 18 (a) being a 3-D plot and Fig. 18 (b) being contour lines with constant PSNR.

**DESCRIPTION OF THE PREFERRED EMBODIMENTS**

Aspects of the invention involve a video encoder/decoder (codec) that is configured to dynamically adapt its algorithms, and automatically change their operating settings, according to available network and computational resources in response to actual complexity measurements performed at run-time, rather than according to off-line line tables for various platforms.

In accordance with this aspect, various parameters of the encoding and decoding algorithms have been organized into an ordered list of settings. In an off-line design phase, the computational requirements and video quality of each setting are measured. The settings are then ordered into a list such that those at the bottom of the list require less computation than those at the top. For the encoder, the settings control the parameters for algorithms such as motion-search window size and sum-of-absolute-difference measurement and the selection of algorithms for motion estimation and half-pel refinement. For the decoder, the settings control the parameters for algorithms such as inverse discrete cosine transform, chroma-skipping, and frame-display skipping.

During run-time operation, the codec of this invention measures the real-time used by an encoding (or decoding) setting for a previous frame. From this value, a weighted average time value is calculated and compared with a target range. If the weighted average is greater than the upper bound of the target value, the algorithm setting is downgraded; if the weighted average is less than the lower bound of the target value and has been so over a predetermined number of frames, the algorithm setting is upgraded. The approach of this invention therefore is to dynamically adapt the operating settings of the encoding (or decoding) algorithms according to the available computational resources.

The codec of this invention also supports a region-of-interest (ROI) coding scheme. A user can manually specify ROI(s) in a video, or the system can automatically identify them. Given such ROI(s) boundaries, the codec can allocate more bits to the ROI(s), leading to better video quality where needed at low bitrates. The codec can also provide forward error correction to the ROI(s), leading to greater error protection over a packet network. In addition, the codec can process the ROI(s) first in the encoding pipeline, adding a level of computational scalability to the associated video server.

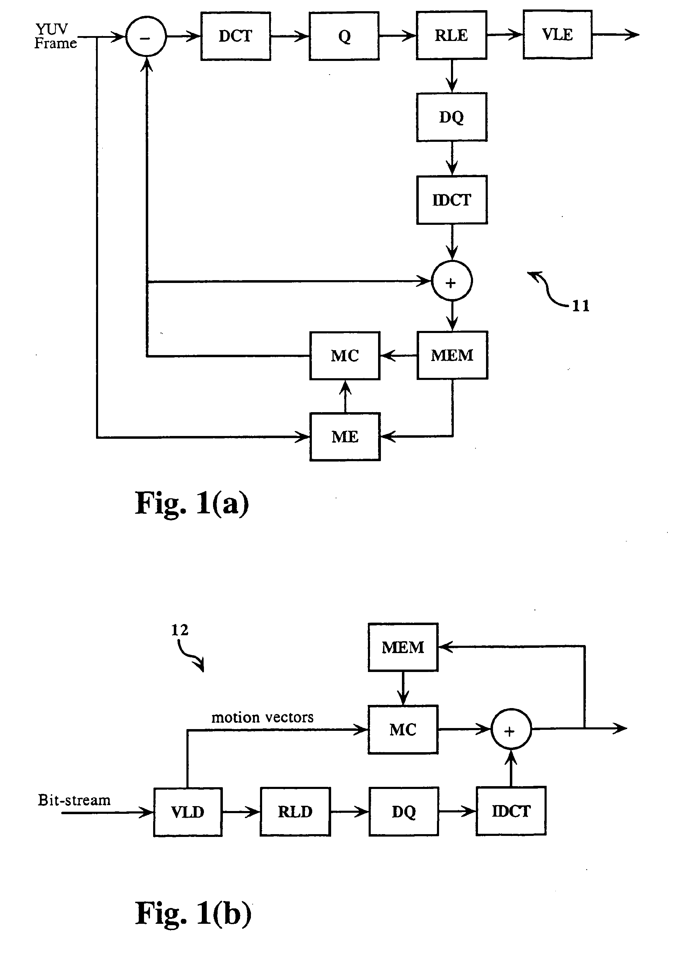

A codec, according to embodiments of the invention, includes both an encoder 11 as shown in Fig. 1 (a) and a decoder 12 as shown in Fig. 1 (b). The encoder 11 digitizes and compresses the incoming signals, multiplexes those signals, and delivers the combined signal (e.g., a baseband digital signal) to a network for transmission to other codecs in the system. The decoder 12 accepts a similarly encoded signal from the network, demultiplexes the received signal, decompresses the video, audio and any other data, and provides analog video and audio outputs and an output for any other received data to the associated device.

As shown in Fig. 1 (a), with respect to video data, encoder 11 receives a current video frame represented by a block of pixels (which may be in YUV color space). That frame is sent to a motion estimation (ME) module where a motion vector is generated and to an operator where a best-matching block of the previous frame and a block to be coded in the current frame are differenced to predict the block in the current frame and to generate a prediction error. The prediction error along with the motion vector are transmitted to a Discrete Cosine Transform (DCT) module where the data is transformed into blocks of DCT coefficients. These coefficients are quantized in a Quantization (Q) module. A Run Length Encoder (RLE) and a Variable Length Encoder (VLC) encode the data for transmission.

The motion compensation loop branches off from the Q module. The quantized coefficients of the prediction error and motion vector and dequantized in a DeQuantization (DQ) module and subjected to an inverse DCT operation in a IDCT module. That result is combined with the motion compensated version of the previous frame and stored in a single frame buffer memory (MEM). The motion vector is generated from the result stored in MEM and the current unprocessed frame in a Motion Estimation (ME) module. The motion vector is provided to a Motion Compensation (MC) module where the best-matching block of the previous frame is generated.

The decoder 12 essentially reverses the operations of the encoder 11. As shown in Fig. 1 (b) the decoder 12 receives a bit-stream (preferably H.263 compliant) to which variable length and run length decoding operations are applied in VLD and RLD modules respectively. The resulting data is dequantized in a DQ module and that result subjected to an IDCT operation to recover a pixel representation. The VLD module also generates a motion vector for the current frame and that vector is supplied to a MC module which takes that and the previous frame in memory (MEM) and generates a motion compensation vector. That motion compensated vector is summed with the recovered pixel representation from the IDCT module to yield a current frame.

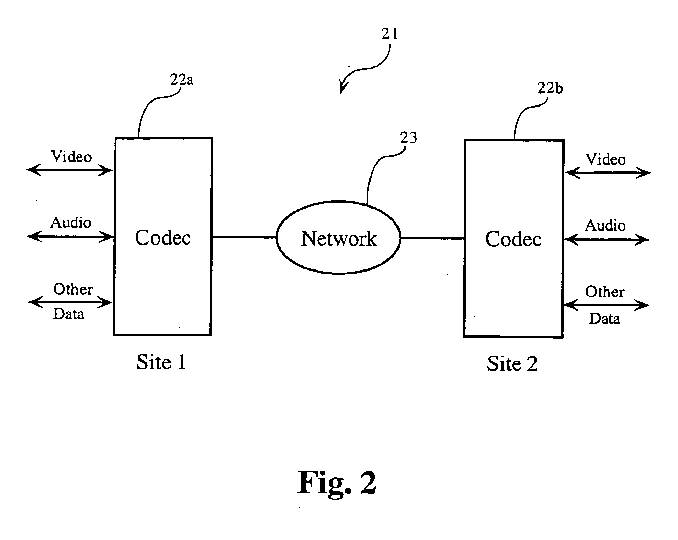

Data flow between codecs 22 in an exemplary video exchange system 21 is shown schematically in Fig. 2. The illustrated system includes only two sites, but that is by way of example only. The system may, and typically does, include additional sites, subject to the system's available resources. A codec 22a/22b is installed at each site, usually in a client device that enables that client to send media to, and/or receive media from, other client devices in the system. Each codec 22 is in communication with the other codecs in the system through a network 23.

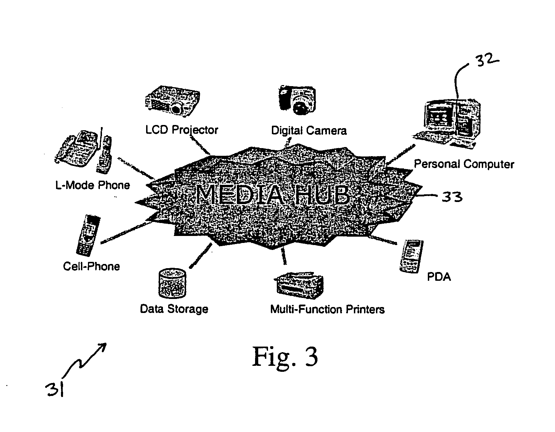

The network may be a standard video conference network, or it may be a media hub 33, such as that shown in Fig. 3, which acts as a server that provides seamless communication between a variety of client devices in an integrated media exchange (IMX) system 31, e.g., a large-scale video conference system. Such a system 31 comprises three major components: Media Transport, Media Management, and Media Analysis.

The real-time component of the IMX system is the Media Transport that generally comprises multiple clients, collectively identified by the reference number 32, and the server 33 which is preferably a multipoint control unit (MCU), e.g., a conference server, that interconnects the clients 32 in a conference session. The server's role is to facilitate the real-time aspects of the IMX system. The server 33 supports the exchange of audio and video data, and for some clients, other data as well. Each IMX client 32 is a device aware endpoint that is used to connect to the real-time conference server 33.

An IMX client device 32 may be a land phone, cell phone, digital projector, digital camera, personal computer, personal digital assistant (PDA), multi-function printer, etc. Other devices may be provided at a particular site, depending on the environment in which the system is supporting. For example, if the system is to accommodate a live video conference, each site may also include (if not already included in the client device) appropriate devices to enable the participant at that site to see and communicate with the other participants. Such other devices (not shown) may include camera(s), microphone(s), monitor(s), and speaker(s).

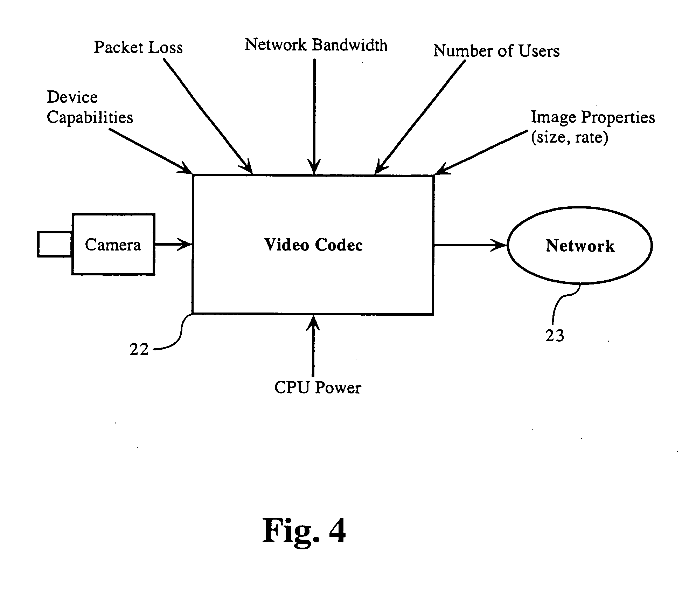

Codec 22 is designed with the demanding real-time processing requirement of IMX Media Transport components in mind. The codec 22 is designed to provide high performance, efficiency, and media quality within a specified bandwidth range (e.g., 100 kbps to 100 Mbps), as well as compatibility with various client devices. Accordingly, codec 22 is configured to adapt its performance to the real-time status of the system, which includes, as shown in Fig. 4, measurements for device capabilities, packet loss, CPU power, network bandwidth, number of users, and image properties. In particular, codec 22 is designed with effective rate control, complexity adaptation, region-of-interest support, error concealment, and extended features from the H.263 video standard.

Codec 22 supports the H.263 standard, which defines a video standard for low bit-rate communication. The source coding algorithms are based on a hybrid inter-picture prediction to remove temporal redundancy and transform coding to remove the remaining spatial redundancy. The source encoder 11 supports five standardized formats: sub-QCIF, QCIF, CIF, 4CIF, and 16CIF, and also user-defined custom formats. The decoder 12 has motion compensation capability as well as supporting half-pixel interpolation. In addition to these basic video algorithms, the H.263 standard defines sixteen negotiable coding options. Extended coding options of the H.263 standard are described below.

The H.263 standard supports a variety of optional modes. To aid in development, the standard organizes these modes into preferred levels. The modes are placed into this level structure based upon performance-related issues: improvements in subjective quality, impact on delay, and impact on computational complexity. Level 1 includes the following modes: advanced intra coding, deblocking filter, full-frame freeze, and modified quantization. Level 2 includes the following modes: unrestricted motion vector, slice structure mode, and reference picture resampling. Level 3 includes the following modes: advanced prediction, improved PB-frames, independent segment decoding, and alternate Inter VLC.

In preferred embodiments, the video codec of this invention incorporates all the modes in Level 1, including advanced intra coding, deblocking filter, full-frame freeze, and modified quantization, and a single mode in Level 2, unrestricted motion vector mode. For a video conference system, these chosen modes have the greatest potential in improving video quality with the least amount of delay and computational overhead. Table 1 shows that these modes are not independent but share coding elements between them. In particular, unrestricted motion vector, advanced prediction mode, and deblocking filter modes share the following five coding elements: motion vectors over picture boundaries, extension of motion vector range, four motion vectors per macroblock, overlapped motion compensation for luminance, and deblocking edge filter.

Table 1:

| Feature coding elements for UMV, AP, and DF modes | | | | | | | |
|---|---|---|---|---|---|---|---|
| Unrestricted Motion Vector mode | Advanced Prediction mode | Deblocking Filter mode | Motion vector over picture boundaries | Extension of motion vector range | Four motion vectors per macroblock | Overlapped motion compensation for luminance | Deblocking edge filter |
| OFF | OFF | OFF | OFF | OFF | OFF | OFF | OFF |
| OFF | OFF | ON | ON | OFF | ON | OFF | ON |
| OFF | ON | OFF | ON | OFF | ON | ON | OFF |
| OFF | ON | ON | ON | OFF | ON | ON | ON |
| ON | OFF | OFF | ON | ON | OFF | OFF | OFF |
| ON | OFF | ON | ON | ON | ON | OFF | ON |
| ON | ON | OFF | ON | ON | ON | ON | OFF |
| ON | ON | ON | ON | ON | ON | ON | ON |

The advanced intra coding mode improves the coding efficiency of INTRA macroblocks in I- and P- frames. The coding efficiency is improved by using INTRAblock prediction using neighboring INTRA blocks for the same component. The first row of AC coefficients may be predicted from those in the block above, or the first column of AC coefficients may be predicted from those in the block to the left, or only the DC coefficient may be predicted as an average from the block above and the block to the left, as signaled by a macroblock-by-macroblock basis. The coding efficiency is further improved by a modified inverse quantization for INTRA coefficients. The quantization step size for the INTRADC coefficient is variable (not fixed to size 8), and the dead zone in the quantizer reconstruction spacing is removed. Finally, the coding efficiency is improved by using a separate VLC for INTRA coefficients.

The de-blocking filter mode uses a block edge filter within the coding loop to reduce blocking artifacts. The filter operates across 8x8 block edges. The filter uses a set of four pixel values on a horizontal or vertical edge and generates a set of filtered output pixels. The actual block edge filter is not a standard linear filter but mixes linear filtering operations with clipping operations. The strength of the filtering operation is further dependent upon the quantization value of the macroblock. If the deblocking filter is signaled, then the filtering operation is performed at the encoder, which alters the picture to be stored for future prediction, as well as on the decoder side.

The full-frame freeze mode is very simple to implement, requiring that the decoder be able to stop the transfer of data from its output buffer to the video display. Freeze mode is set by the full picture freeze request in the FTYPE function values. In freeze mode, the display picture remains unchanged until the freeze picture release bit in the current PTYPE or in a subsequent PTYE is set to 1, or until timeout occurs.

The modified quantization mode allows modification to the quantizer operation on a macroblock by macroblock basis and allows changes greater than those specified by DQUANT. This mode includes the four key features: the bit-rate control ability for encoding is improved by altering the syntax for the DQUANT field. The chrominance fidelity is improved by specifying a smaller step size for chrominance than that for luminance data. The range of representable coefficient values is extended to allow the representation of any possible true coefficient value to within the accuracy allowed by the quantization step size. The range of quantized coefficient levels is restricted to those which can reasonably occur, to improve the detectability of errors and minimize decoding complexity.

The unrestricted motion vector mode improves the video quality for sequences with rapid motion or camera movement. The first feature, motion vector over picture boundaries, allows the motion vectors to point outside of the picture. When a reference is made to a pixel outside the picture, an edge pixel is used to extrapolate the pixel value. The second feature, unrestricted motion vector values, supports longer motion vectors. For CIF pictures, motion vectors extend from the range of [-16, 15.5] to [-32, 31.5]. The longer motion vector support can provide greater coding efficiency, especially for large picture sizes, rapid motion, camera movement, and low picture rates.

In a video conference system 31, such as IMX, the target bit-rate changes as clients 32 join/leave the session or network load conditions change. Also, for a given codec 22, the number of encoded bits varies as the content of the video changes. In such a dynamic environment, codec 22 implements a number of rate control schemes to adapt the number of encoded bits to the target bit-rate. Some schemes operate at the frame level, including bit allocation between I/P frames, frequency of I frames, and also frame layer skip control. Others operate at the macroblock level, controlling the quantizer step sizes.

In general, the generation of intra-coded (I) frames requires more bits than that of inter-coded (P) frames. For low bit-rate communications, controlling the frequency of I-frames and bit allocation between I/P-frames are effective rate control methods. In codec 22, the frequency of I-frames is set to 1 every 3 seconds, except in LOWRATE mode (see below). The bit-rate is apportioned as 7x for every I-frame and x for every P-frame, with x determined so that (taking frequency of I-frames into account) the overall rate equals the specified target rate.

Separate quantizer step sizes are maintained for I- and P-frames. At the start of a frame, the quantizer step size is set to be the average value used over the last frame of the same type. Before each group of blocks (gob), if the partial rate for that frame is below the limit set by the rate budget minus 4*tolerance, then the quantizer step size is reduced by 1. If it is above the limit plus 2*tolerance, then the quantizer step size is increased by 1. If it is above the limit plus 4*tolerance, then the quantizer step size is increased further by 1. The value of "tolerance" reduces linearly from 1/5 of the rate budget to 1/10 of the rate budget, from the first gob to the last gob--the rationale being that normally it should not be necessary to vary the quantizer step size aggressively as it is the average value of what achieved the target rate on the last frame of the same type. Note that a "gob" is dependent on image/frame size.

If the target bit-rate is such that bits-per-macroblock is lower than 35 (which is about the budget at 128kbps CIF at 15 fps), then the LOWRATE mode is entered. In this mode, there are two differences compared to the above:

1. I-frames are sent once every 30 seconds, unless there is motion in more than 20% of the MBs, in which case I-frames are sent once every 3 seconds. The bit budget for each I-frame inserted at this lower frequency rate has a bit budget that is the same as that of a P-frame.
2. In intra blocks, DCT coefficients with zig-zag index $\geq 6$ are set to zero for:

a. luminance blocks with DC < 80

b. high-activity blocks where total absolute quantized level in first 5 zigzag coefficients is less than 1/4 of that in all the coefficients.

Finally, a frame layer skip control scheme that takes advantage of the varying bit requirements between frames is implemented. For each GOP (I- and P-frame sequence), a bit budget is calculated based on the target bit-rate and I/P-frame bit allocation. During the encoding process, a running count of the actual bits used per frame compared to the bit budget is kept. If the bits used is less than the bit budget, the underflow is calculated and the bit budget increased by that amount for the next frame. If the bits used is more than the bit budget, the overflow is calculated. Once the accumulated overflow is greater than the bit budget for a typical P-frame, then the next P-frame encoding is skipped (i.e., send out a header with uncoded MBs).

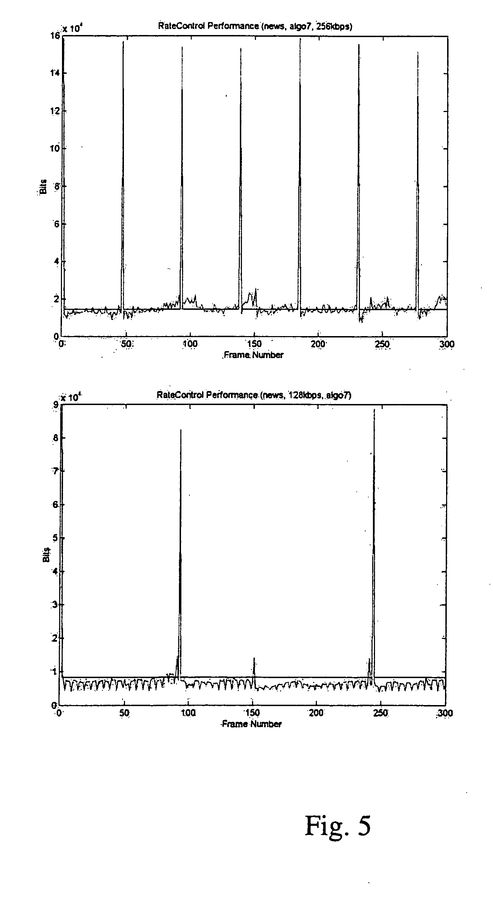

Rate control performance encoding two sequences at 256 kbps and 128 kbps respectively is shown in Fig. 5.

As previously noted, codec 22 is also capable of complexity adaptation. Each instance of encoder 11 (decoder 12) constantly monitors its performance in real-time and upgrades or downgrades the algorithms that it uses according to the available computational power. Thus, in the context of IMX 31, as clients 32 join/leave a conference, the video encoders (decoders) intelligently adapt themselves. Moreover, this adaptation is based on real-time performance measurement and does not rely on platform/environment-specific tables. Performance is measured and the algorithms automatically upgrade/downgrade themselves in a smart way, without overburdening the system and without making it too sensitive or too lax to changes in available computational power.

Encoder 11 may be part of a codec such as that shown in Fig. 2, or it may be a stand alone module. Either way, encoder 11 includes parameters which are used to specify different settings at which the encoder's algorithms will operate. In accordance with aspects of the invention, each encoder 11 is designed so as to operate at algorithm settings 0 to 8, with setting 0 being the fastest and setting 8 the slowest. The various intermediate algorithm settings are obtained by varying one or more parameters as shown in Table 2.

Table 2:

| Parameter selection for the 9 video encoding settings | | | | | | | | |
|---|---|---|---|---|---|---|---|---|
| | X search window | Y search window | Skip mode prediction | Half-pel subsample factor | Full-pel subsample factor | Use half-pel | DCT truncation | Motion estimation method |
| Level 0 | 8 | 6 | true | n/a | 4 | false | 64 | log |
| Level 1 | 8 | 6 | true | 4 | 4 | true | 64 | log |
| Level 2 | 12 | 10 | true | 4 | 4 | true | 64 | log |
| Level 3 | 12 | 10 | true | 4 | 4 | true | 64 | diamond |
| Level 4 | 12 | 10 | true | 2 | 4 | true | 64 | diamond |
| Level 5 | 12 | 10 | true | 2 | 2 | true | 64 | diamond |
| Level 6 | 12 | 10 | false | 2 | 2 | true | 64 | diamond |
| Level 7 | 16 | 16 | false | 2 | 2 | true | 64 | diamond |
| Level 8 | 16 | 16 | false | 1 | 1 | true | 64 | diamond |

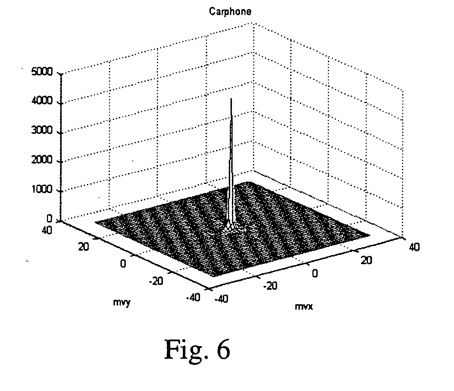

The x- and y- search window dimensions control the size of the grid that is searched during motion estimation. Fig. 6 shows the distribution of motion vectors for a typical sequence. The motion vectors are mostly clustered near the origin (0, 0) and drop off significantly near the edges of the search window. The distribution has a greater range in the x direction than in the y direction. In order to speed up motion estimation, the search range can be reduced in both the x and y directions. The x-search window ranges from 8 to 16; the y-search window ranges from 6 to 16. A smaller search range reduces the computational cost of motion estimation but decreases the compression efficiency.

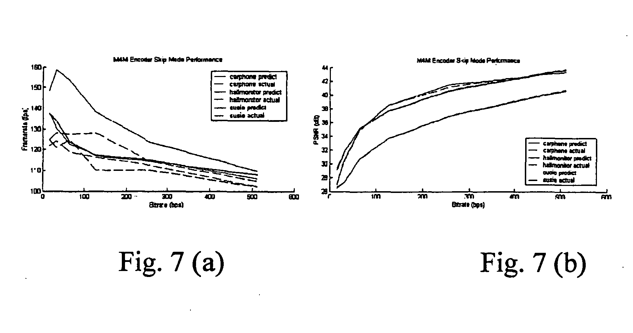

The skip mode prediction estimates an uncoded MB mode based on the residual values from motion estimation. In normal processing, the residual values are further processed by quantization, dequantization, and inverse DCT before an uncoded mode is detected. In skip mode prediction, an uncoded mode is detected if the DC of the residual values is less than a threshold and the motion vector is set to zero. Fig. 7 (a) shows that skip mode prediction speeds up the encoding pipeline for several typical videos. Fig. 7 (b) shows that the PSNR performance of skip mode prediction is similar to that of normal processing.

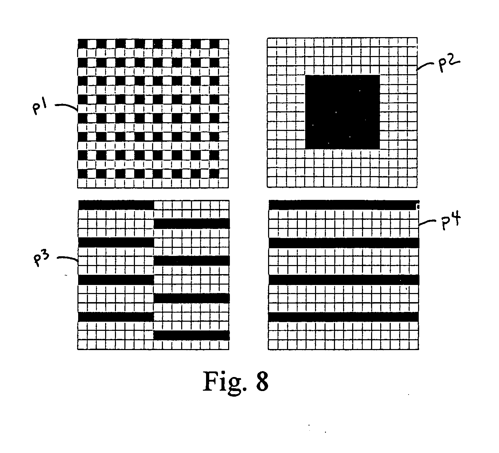

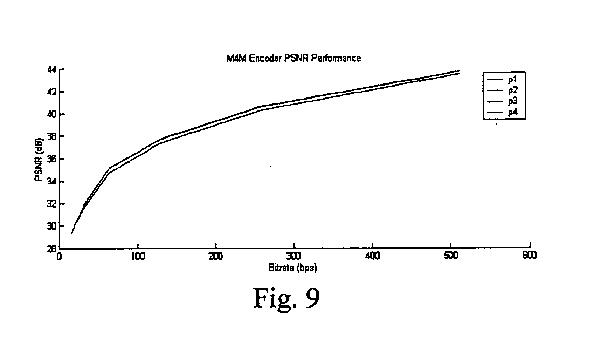

In motion estimation, sum-of-absolute differences (SAD) are calculated for every point in the search range. Between two macroblocks, each SAD calculation requires 256 subtractions and 255 additions. Full-pel and half-pel subsample factors reduce the costs in calculating the SAD by subsampling the number of pixel values used in the calculation. Fig. 8 shows some of the subsample patterns (p1, p2, p3, p4) that are used in codec 22. Fig. 9 shows that the PSNR performances of the subsample patterns (p1, p2, p3, p4) are identical.

The parameter use half-pel provides an option to skip half-pel calculations during motion estimation. DCT truncation reduces the cost in calculating the forward and inverse DCT by truncating the number AC coefficients. Truncating the AC coefficients to say 7 greatly speeds up DCT calculations but causes noticeable distortion in the video. Finally, motion estimation method provides several search methods: full, diamond, and logarithmic search. Full search is the most computationally expensive method but guarantees finding the minimum SAD value. Diamond search is a less computationally expensive method that is based on two heuristics: (i) it searches a diamond shaped pattern instead of all the points on the grid and (ii) the search proceeds in the direction of the current minimum SAD value. Logarithmic search is the least computationally expensive search and is very similar to binary search.

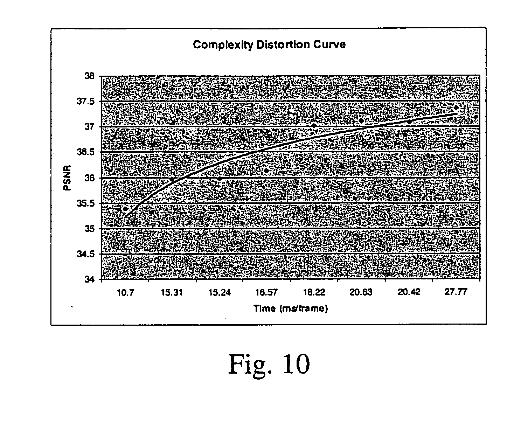

During an off-line design phase, the particular parameter choices corresponding to each of the 9 algorithm settings are determined by performing measurements on a large set of representative video streams and identifying the upper envelope of the quality (PSNR) vs. complexity (running-time) curve and choosing roughly equi-spaced (along the complexity axis) points, as shown in Fig. 10. Thus, after this off-line design phase, the 9 algorithm settings are selected to provide a smooth transition across the operating range of the encoder.

Decoder 12, like encoder 11, is either as part of a codec 22 or provided as a stand alone module, and is designed with similar principles in mind. Decoder 12 is implemented so as to be operable at decoding algorithm settings 0 to 4. For decoder 12, variable parameters which are used to specify different operating settings include: inverse discrete cosine (very approximate, approximate, actual), chroma-skipping (off or on), and frame-display skipping (some k% of frames). Again, the parameter choices for the 5 settings are determined off-line. The different algorithm settings are selected to provide a smooth transition across the operating range of decoder 12, and each algorithm setting 0 to 4 is correlated with a particular group of parameter settings from which that algorithm setting is obtained, as shown in Table 3.

Table 3:

| Parameter selection for the 5 video decoding settings | | | |
|---|---|---|---|
| | DCT algorithm | Chroma skipping | Frame display skipping |
| Level 0 | (very)approximate | on | 5 |
| Level 1 | approximate | on | 2 |
| Level 2 | approximate | off | 2 |
| Level 3 | actual | off | 2 |
| Level 4 | Actual | off | 0 |

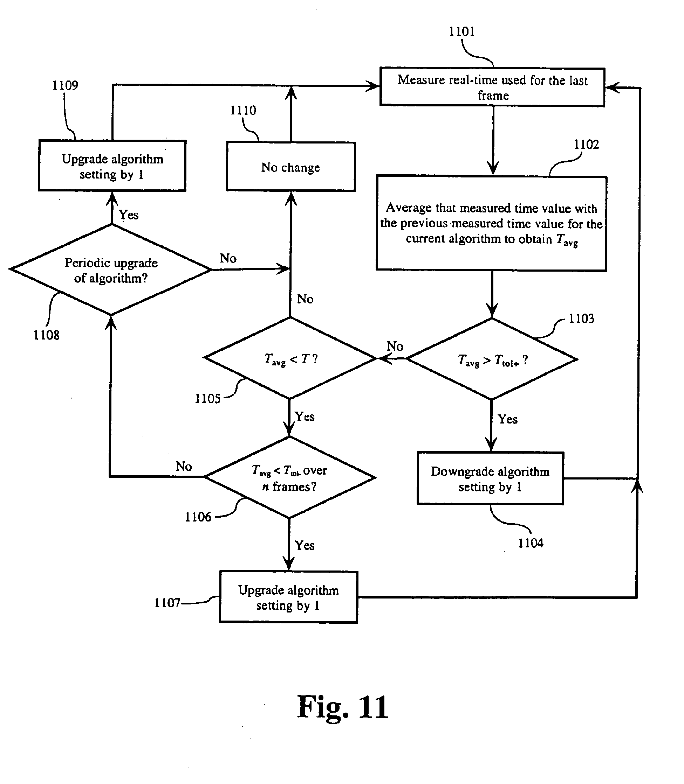

The manner in which each codec 22 dynamically adjusts its algorithm settings is described next with reference to the flow diagram of Fig. 11. At run-time, each encoder 11 and each decoder 12 measures the time (real-time) used for the last frame (step 1101). This time is averaged with the previous measured time value for the current algorithm setting (step 1102); thus, the value that gets used ($T_{avg}$) is the weighted average over the entire history for that algorithm setting, with the most recent measurement carrying a weight of 0.5, the one before that of 0.25, and so on. This time value $T_{avg}$ is then compared with a target time value $T$. The target time value $T$ is either specified by the system (based upon the total number of concurrent video streams and other load), or is heuristically set to be half the value determined by the stream's frames-per-second speed. If the measured value $T_{avg}$ is greater than the target value $T$ plus a tolerance $t+$ (the additive sum represented by $T_{tol+}$), then the algorithm setting is downgraded by 1. If the measured value $T_{avg}$ is less than the target value $T$ then typically no change is made, with the following exceptions: (a) if the measured value $T_{avg}$ is lower than some extra tolerance $t-$ below the target value, the lower boundary represented by $T_{tol\_}$, and is consistently so over a certain number of frames, then the algorithm is upgraded by 1; and (b) periodically, the algorithm setting is upgraded by 1 to test the waters, as it were, to check if possibly the computational load on the system has come down and a higher setting is possible. Tolerance values $t+$ and $t-$ may be a certain percentage of the target $T$. A typical choice would be a small tolerance on the high side, say 2% above $T$, and a moderate tolerance on the low end, say 10% below $T$. Such a setting is conservative in the sense that the algorithm is not upgraded aggressively, but is downgraded almost as soon as the running time overshoots the target.

Thus, one way in which such control can be realized is described below. Continuing with the flow diagram of Fig. 11, in step 1103, it is determined if $T_{avg} > T_{tol+}$. If so, then the algorithm setting is downgraded by 1 in step 1104. If not, it is next determined in step 1105 if $T_{avg} < T$. If so, it is then determined in step 1106 whether $T_{avg} < T_{tol\_}$ and has been so consistently over a predetermined number of frames $n$, where $n$ is typically in the range of about 5 to about 100, bearing in mind that smaller values make the system more sensitive to change. If the decision in step 1106 is "yes," the algorithm setting is upgraded by 1 in step 1107. If the decision in step 1106 is "no," which means that $T_{avg}$ is either between $T_{tol\_}$ and $T$, or is less than $T_{tol\_}$ but has not been consistently so over $n$ frames, then it is determined in step 1108 if a periodic upgrade of the algorithm setting is in order. If so, the algorithm setting is upgraded by 1 in step 1109. If not, the algorithm setting remains unchanged in step 1110. The algorithm setting also remains unchanged if $T_{avg}$ is between $T$ and $T_{tol+}$ (step 1105 returns "no"). After the algorithm setting is either downgraded (step 1104), upgraded (step 1107 or 1109), or left unchanged (step 1110), the control process loops back to step 1101 where another real-time measurement is made. The process continues during run-time until there are no more frames to consider.

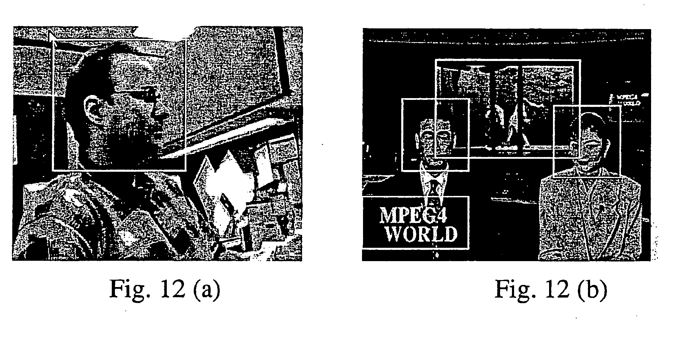

With respect to the region-of-interest (ROI) coding aspects of this invention, an ROI is defined with the following spatial and temporal properties: position, duration, size, shape, and importance. As previously noted, the codec of this invention supports video with a single ROI or multiple ROIs. Multiple ROIs can be non-overlapping or overlapping. The ROI can be manually defined by a bounding box or automatically detected using face detection, text detection, moving region detection, audio detection, or slide detection. In a video conference system such as IMX, typical ROIs are shown in Figs. 12 (a) and (b), using rectangular bounding boxes to highlight face and text regions.

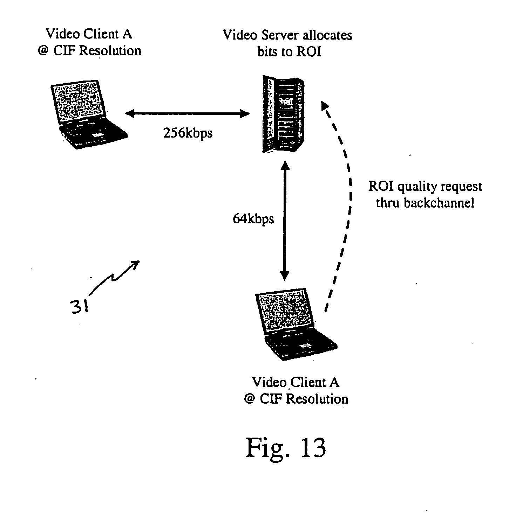

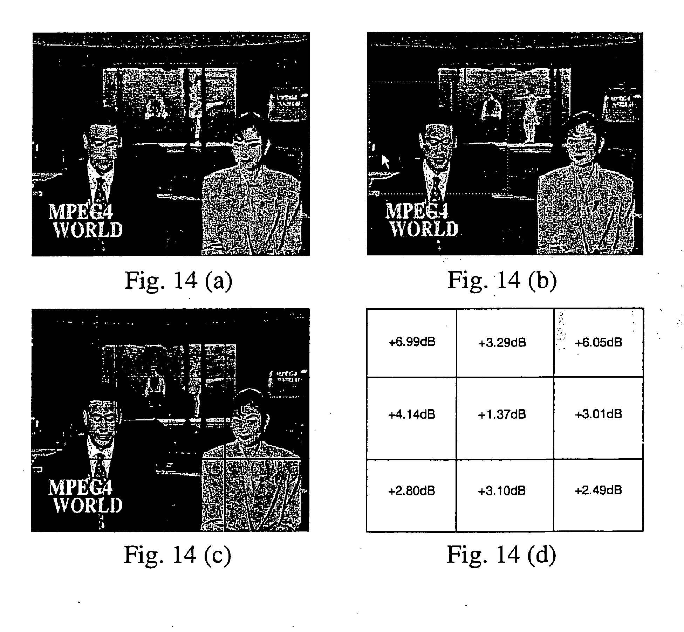

In the IMX system 31, Fig. 13 shows an exemplary scenario. Client A connects to the video server and sends/receives encoded video at 256 kbps; client B connects to the video server and sends/receives encoded video at 64 kbps. At CIF resolutions, the decoded video for client B will have poor quality due to a low speed connection. However, client B can select an ROI, such as the face region in Fig. 12 (a), and send a request (along with the ROI properties) to the server through the back channel to improve the video quality in the chosen ROI. The server then passes the request to the codec serving client B. In accordance with embodiments of the invention, the codec supports requests to improve the video quality in select ROI(s) using the following methods: (i) MB-layer quantizer control, (ii) DCT coefficient thresholding, (iii) MB-skip mode control, and (iv) Cb/Cr channel dropping. An original frame of a video shown in Fig. 14 (a) is compared to the ROI coded version shown in Fig. 14 (b). PSNR measurements in Figs. 14 (c) and (d) show that these ROI coding methods increase the PSNR of the ROI over the original from +2 to +6 dB.

Once an ROI request is made, the codec adjusts its algorithms to improve the video quality within the ROI. During run-time, the encoder is given a certain bit budget to allocate for the current frame. The bit budget is set by the frame rate and target bit-rate. The rate control methods described above essentially try to uniformly distribute the bits across the entire frame. If an ROI is defined, however, the encoder adjusts it algorithms to assign more bits to regions inside the ROI and less to those outside the ROI. The encoder first labels each macroblock as either inside or outside. For those macroblocks outside, a number of methods can be used to reduce the bit allocation. These include setting the macroblock to uncoded mode or increasing the quantizer step size. For those macroblocks inside, the codec reduces the quantizer step sizes to increase the number bits used for encoding.

Separate quantizer step sizes, $Q_{in}$ and $Q_{out}$, are maintained for macroblocks inside and outside the ROI, respectively. At the start of a frame, the quantizer step size $Q_{in}$ is set to a low value based on the bit-rate:

$$Q_{in} = \begin{cases} 6K & bitrate > 256kbps \\ 10K & bitrate > 128kbps \\ 12K & otherwise \end{cases}$$

For each subsequent macroblock inside, if the partial rate for that frame is below the limit set by the rate budget minus 4*tolerance, then the quantizer step size is reduced by 1. If it is above the limit plus 8*tolerance, then the quantizer step size is increased by 1. The value of "tolerance" reduces linearly from 1/5 of the rate budget to 1/10 of the rate budget, from the first mb to the last mb inside the ROI. In a non-foveated mode, the quantizer step size $Q_{out}$ is either set to 25 for the entire frame, or the outside macroblocks are set as uncoded. In a foveated mode, the quantizer step size $Q_{out}$ is set to a value that is linearly increasing as its distance to the center of the ROI increases. This way the quality of the video slowly degrades from the center of the ROI to the edges of the frame.

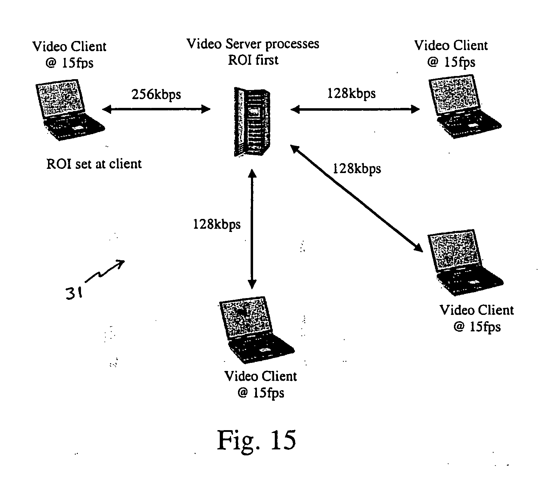

In the IMX system 31 of Fig. 15, a number of clients are connected to the video server. As more and more clients join the session, the computational load of the video server increases. Nonetheless, the video server must continue to meet its real-time constraints, delivering video to each client at a specific interval. In IMX, in fact, each codec on the server side is scheduled to deliver an encoded frame by time $t$. Time $t$ is estimated based on the number of clients and computational cost of video/audio codecs. If that time constraint is not met, the encoded frame (and the processing up to time $t$) is simply discarded at that point.

ROI coding provides a computationally scalable alternative. If an ROI is specified, the codec reorders the incoming bit-stream and processes the macroblocks inside the ROI first. Once all the macroblocks inside are processed, the codec processes the macroblocks outside the ROI with the remaining time. If the codec is not able to process all the macroblocks before time *t*, it is still able to deliver an encoded bit-stream with macroblocks inside the ROI processed and those outside the ROI set to uncoded mode.

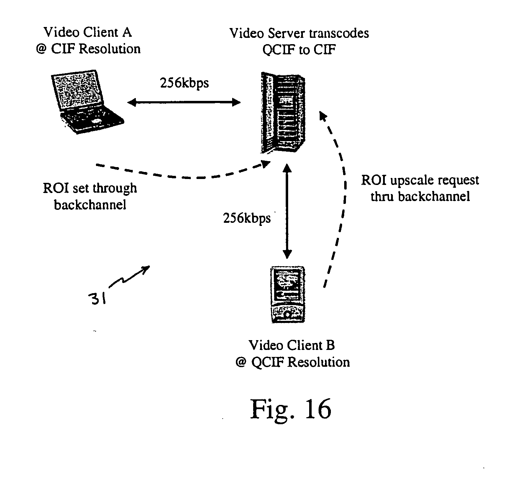

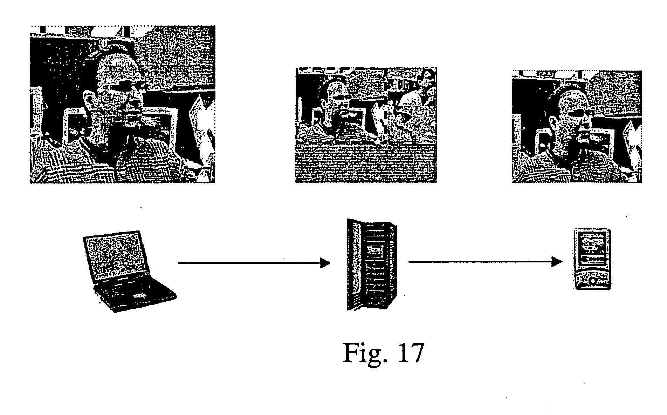

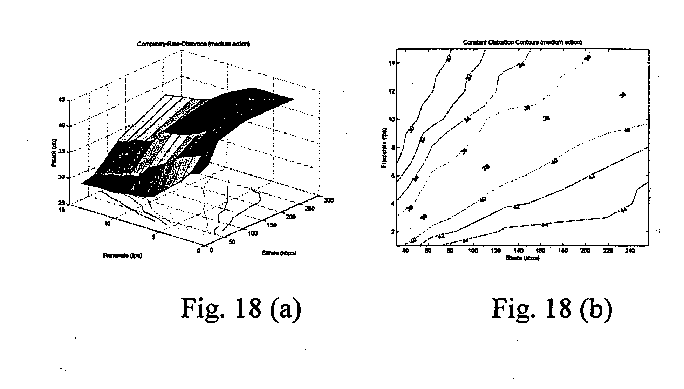

In the IMX system 31 of Fig. 16, client A connects to the video server and sends/receives CIF encoded video at 256 kbps; client B connects to the video server and sends/receives *QCIF* encoded video at 256 kbps. At QCIF resolution, the video received by client B is a downsampled version of the composite video sent by the server, showing both important and non-important regions in a small display (see Figure 18 (b)). However, client B can send an ROI request to the server to highlight just a portion of the video. The server transcodes that region directly in the compressed domain to a QCIF encoded bit-stream. Fig. 17 shows the transcoding operations. Instead of just delivering the video as is to the requesting client, the server transcodes the video according to the ROI and delivers the portion requested.

In any practical video codec system, there is a tradeoff between loss (or distortion D) and the bit-rate of the compressed stream (say R). In the codec of this invention, this notion is expanded by including complexity (or frame rate F) into a complexity-rate-distortion function. Here, D is measured as PSNR; R is measured as bits per second; and F is measured as frames per second. In Fig. 18 (a), the complexity-rate-distortion curve is graphed for the codec of this invention by measuring the PSNR at various settings for bit-rate and frame-rate. Not surprisingly, the graph shows that PSNR increases with increasing bit-rate and framerate. In Fig. 18 (b), the contour lines of Fig. 18 (a) for constant PSNR values are plotted. For a given distortion D, the contour lines show the minimum bit-rate (bps) and frame-rate (fps) needed to achieve the target PSNR (dB).

As will be readily apparent from the foregoing description, the codec, as well as the individual encoder and decoder, of this invention provide a number of advantages over the prior art. The codec of the present invention offers considerable adaptability. The codec provides for improved rate control and to that end is able to adapt the number of encoded bits its produces to a system target bit-rate. The codec of this invention is also advantageously configured to adaptively modify its complexity, which is a very important feature for codecs in a system (such as a video conferencing server) with multiple codecs using up shared computational resources. Moreover, the codec of the present invention not only has parameters for specifying the complexity, but also has such complexity parameters grouped into algorithm settings which automatically change in response to actual measured run-time complexity as described above. Actual measurements at run-time do away with inaccurate estimates based upon cycle-counts that fail to take into account real-time variations in systems owing to varying load, multithreading, IO, number of clients, etc. The codec of this invention also offers an improved ROI coding scheme that includes scalable computational complexity and transcoding.

The functions of the codec, encoder and decoder of this invention may conveniently implemented in software. An equivalent hardware implementation may be obtained using appropriate circuitry, e.g., application specific integrated circuits ASICs, digital signal processing circuitry, or the like.

With these implementation alternatives in mind, it is to be understood that the figures and accompanying description provide the functional information one skilled in the art would require to write program code (i.e., software) or to fabricate circuits (i.e., hardware) to perform the processing required. Accordingly, the claim language "machine-readable medium" further includes hardware having a program of instructions hardwired thereon. The term "module" as used in the claims is likewise intended to embrace a software or hardware configuration.

While the invention has been described in conjunction with several specific embodiments, many further alternatives, modifications, variations and applications will be apparent to those skilled in the art that in light of the foregoing description. Thus, the invention described herein is intended to embrace all such alternatives, modifications, variations and applications as may fall within the spirit and scope of the appended claims.

**Claims**

1. A method for adapting the number of encoded bits produced by a codec to a system target bit-rate, comprising:

> determining if the system target bit-rate is such that bits-per-macroblock is less than a predetermined number, if not,
>> setting the frequency at which intra-coded frames are sent to a first predetermined frequency range,
>> allocating bits between intra-coded frames and inter-coded frames according to a first predetermined factor, and
>> controlling quantizer step sizes for the intra-coded and inter-coded frames,
> if so,
>> setting the frequency at which intra-coded frames are sent to a second predetermined frequency range that is lower than the first predetermined frequency range, unless there is motion in more than a predetermined percentage of the macroblocks, in which case the sending frequency of the intra-coded frames is set to the first predetermined frequency range, and
>> setting to zero transform coefficients having a zig-zag index greater than or equal to a preset number in select intra-coded frame transform coefficient blocks.

2. A method as recited in claim 1, wherein the select intra-coded frame transform coefficient blocks include (i) each luminance block with a DC transform coefficient whose value exceeds a predetermined number and (ii) each high-activity block wherein the total absolute quantized level in select transform coefficients is less than a preset fraction of the total absolute quantized level in all of the transform coefficients in that block.

3. A method as recited in claim 1, wherein the controlling of the quantizer step sizes comprises setting the quantizer step size for a particular type of frame to the average value used over the last frame of the same type, and adjusting the quantizer step size for the current frame of that type by comparing a partial bit-rate for that frame with a bit-rate range.

4. A method as recited in claim 1, further comprising maintaining a count of the actual bits used per frame, and, if the accumulated bit count exceeds a bit budget for a typical inter-coded frame, skipping the encoding of the next inter-coded frame.

5. A codec, comprising:

an encoder that includes a first plurality of variable parameters including x-search window, y-search window, skip mode protection, half-pel subsample factor, full-pel subsample factor, use half-pel, transform truncation, and motion estimation method for specifying a plurality of different settings at which a coding algorithm applied to uncoded video data can operate; and

a decoder that includes a second plurality of variable parameters including transform algorithm, chroma skipping, and frame display skipping for specifying a plurality of different settings at which a decoding algorithm applied to coded video data can operate;

wherein the codec is configured such that, during operation, at least one of the coding algorithm and decoding algorithm is able to dynamically change its operating setting according to available computational resources in response to actual complexity measurements performed at run-time.

6. A codec as recited in claim 5, wherein the plurality of different settings at which the coding algorithm can operate is 9.

7. A codec as recited in claim 5, wherein the plurality of different settings at which the decoding algorithm can operate is 5.

8. An encoder, comprising:

a plurality of variable parameters including x-search window, y-search window, skip mode protection, half-pel subsample factor, full-pel subsample factor, use half-pel, transform truncation, and motion estimation method for specifying a plurality of different settings at which a coding algorithm applied to uncoded video data can operate;

wherein the encoder is configured such that, during operation, its coding algorithm is able to dynamically change its operating setting according to available computational resources in response to actual complexity measurements performed at run-time.

9. A decoder, comprising:

a decoder that includes a plurality of variable parameters including DCT algorithm, chroma skipping, and frame display skipping for specifying a plurality of different settings at which a decoding algorithm applied to coded video data can operate;

wherein the decoder is configured such that, during operation, its decoding algorithm is able to dynamically change its operating setting according to available computational resources in response to actual complexity measurements performed at run-time.

10. A video conferencing system, comprising:

a plurality of codecs configured to share the system's computational resources, each codec comprising

an encoder that includes an associated set of parameters including x-search window, y-search window, skip mode protection, half-pel subsample factor, full-pel subsample factor, use half-pel, transform truncation, and motion estimation method for specifying a plurality of different settings at which an associated coding algorithm applied to uncoded video data can operate, and

a decoder that includes an associated set of parameters including DCT algorithm, chroma skipping, and frame display skipping for specifying a plurality of different settings at which an associated decoding algorithm applied to coded video data can operate,

wherein each of the codecs is configured such that its algorithms in use dynamically adapt their operating settings during operation according to the system's available computational resources in response to actual complexity measurements performed at run-time.

11. In an arrangement comprising a plurality of clients and at least one server, a device configured to respond to a particular client for which a region-of-interest is identified in a video to be delivered to that client, the device comprising:

a resource-allocation module configured to assign more bits to coding video data in the region-of-interest, and to assign less bits to coding video data outside of the region-of-interest by setting a quantizer step size for the video data outside of the region-of-interest to a value that increases as the distance from the center of the region-of-interest increases;

a scalable complexity module configured to process the region-of-interest video data before processing video data outside of the region-of-interest; and

a transcoding module configured to transcode the video for that client in accordance with that client's display properties.

12. In an arrangement as recited in claim 11, wherein the device is further configured to reorder a bit-stream representing the video to be delivered to the particular client by placing the region-of-interest data first or by adding forward error correction to the region-of-interest.

13. In an arrangement as recited in claim 11, wherein the region-of-interest for a particular client comprises one or more regions-of-interest defined by a user of the particular client.

14. In an arrangement as recited in claim 13, wherein the user of the particular client identifies the one or more regions-of-interest by sending a request, along with the properties of the one or more regions-of-interest to the server through a back channel.

15. In an arrangement as recited in claim 11, wherein the device is incorporated in the server and serves the particular client.

16. A machine-readable medium embodying a program of instructions for directing a codec to adapt the number of encoded bits produced by the codec to a system target bit-rate, the program of instructions comprising:

(a) instructions for determining if the system target bit-rate is such that bits-per-macroblock is less than a predetermined number;

(b) instructions for setting the frequency at which intra-coded frames are sent to a first predetermined frequency range;

(c) instructions for allocating bits between intra-coded frames and inter-coded frames according to a first predetermined factor;

(d) instructions for controlling quantizer step sizes for the intra-coded and inter-coded frames;

(e) instructions for setting the frequency at which intra-coded frames are sent to a second predetermined frequency range that is lower than the first predetermined frequency range, unless there is motion in more than a predetermined percentage of the macroblocks, in which case the sending frequency of the intra-coded frames is set to the first predetermined frequency range; and

(f) instructions for setting to zero transform coefficients having a zig-zag index greater than or equal to a preset number in select intra-coded frame transform coefficient blocks,
wherein instructions (b), (c) and (d) are executed only if it is determined that the system target bit-rate is such that bits-per-macroblock is not less than a predetermined number, and
wherein instructions (e) and (f) are executed only if it is determined that the system target bit-rate is such that bits-per-macroblock is less than a predetermined number.

17. A machine-readable medium as recited in claim 16, wherein the select intra-coded frame transform coefficient blocks include (i) each luminance block with a DC transform coefficient whose value exceeds a predetermined number and (ii) each high-activity block wherein the total absolute quantized level in select transform coefficients is less than a preset fraction of the total absolute quantized level in all of the transform coefficients in that block.

18. A machine-readable medium as recited in claim 16, wherein instruction (d) comprises setting the quantizer step size for a particular type of frame to the average value used over the last frame of the same type, and adjusting the quantizer step size for the current frame of that type by comparing a partial bit-rate for that frame with a bit-rate range.

19. A machine-readable medium as recited in claim 16, further comprising:

(g) instructions for maintaining a count of the actual bits used per frame, and, if the accumulated bit count exceeds a bit budget for a typical inter-coded frame, skipping the encoding of the next inter-coded frame.

Fig. 1(a)

Fig. 1(b)

**Fig. 2**

LCD Projector

Digital Camera

_32_

L-Mode Phone

Personal Computer

MEDIA HUB

_33_

Cell-Phone

PDA

Data Storage

Multi-Function Printers

Fig. 3

_31_

Packet Loss    Network Bandwidth    Number of Users

Device
Capabilities

Image Properties
(size, rate)

Camera    →    **Video Codec**    →    **Network**

22

23

CPU Power

# Fig. 4

Fig. 5

Fig. 6

Fig. 7 (a)

Fig. 7 (b)

Fig. 8

Fig. 9

Fig. 10

1101

Measure real-time used for the last frame

1109

Upgrade algorithm setting by 1

1110

No change

1102

Average that measured time value with the previous measured time value for the current algorithm to obtain $T_{avg}$

Yes

Periodic upgrade of algorithm?

No

1108

No

$T_{avg} < T$ ?

No

1103

$T_{avg} > T_{tol+}$ ?

1105

Yes

Yes

$T_{avg} < T_{tol-}$ over $n$ frames?

No

1106

Downgrade algorithm setting by 1

1104

Yes

Upgrade algorithm setting by 1

1107

**Fig. 11**

Fig. 12 (a)

Fig. 12 (b)

Video Client A
@ CIF Resolution

Video Server allocates
bits to ROI

256kbps

ROI quality request
thru backchannel

64kbps

31

Video Client A
@ CIF Resolution

## Fig. 13

Fig. 14 (a)

Fig. 14 (b)

Fig. 14 (c)

| +6.99dB | +3.29dB | +6.05dB |
|---------|---------|---------|
| +4.14dB | +1.37dB | +3.01dB |
| +2.80dB | +3.10dB | +2.49dB |

Fig. 14 (d)

Video Client
@ 15fps

Video Server processes
ROI first

Video Client
@ 15fps

256kbps

128kbps

ROI set at client

128kbps

128kbps

31

Video Client
@ 15fps

Video Client
@ 15fps

Fig. 15

Video Client A
@ CIF Resolution

Video Server transcodes
QCIF to CIF

256kbps

ROI set through
backchannel

256kbps

ROI upscale request
thru backchannel

31

Video Client B
@ QCIF Resolution

# Fig. 16

Fig. 17

Fig. 18 (a)

Fig. 18 (b)